(19) Europäisches Patentamt

European Patent Office

Office européen des brevets

(11) EP 0 718 187 B1

(12) FASCICULE DE BREVET EUROPEEN

(45) Date de publication et mention
de la délivrance du brevet:
**26.05.1999 Bulletin 1999/21**

(51) Int. Cl.⁶: **B64C 27/00**, F16F 15/00,
F16F 15/06

(21) Numéro de dépôt: **95402928.6**

(22) Date de dépôt: **22.12.1995**

(54) **Dispositif de suspension anti-vibratoire bidirectionnelle pour rotor d'hélicoptère**

Lagerungsvorrichtung mit bidirektionalem Schwingungsdämpfer für einen Hubschrauberrotor

Bidirectional vibration absorbing suspension device for a helicopter rotor

(84) Etats contractants désignés:
**DE GB IT**

(30) Priorité: **23.12.1994 FR 9415592**

(43) Date de publication de la demande:
**26.06.1996 Bulletin 1996/26**

(73) Titulaire: **EUROCOPTER**
**F-13725 Marignane Cédex (FR)**

(72) Inventeur: **Guimbal, Bruno R.**
**F-13290 Les Milles (FR)**

(74) Mandataire: **Bérogin, Francis**
**Cabinet Plasseraud**
**84, rue d'Amsterdam**
**75440 Paris Cedex 09 (FR)**

(56) Documents cités:
**FR-A- 2 120 131          FR-A- 2 275 696**
**US-A- 3 698 663**

**Description**

L'invention concerne un dispositif de suspension anti-vibratoire bidirectionnelle d'un rotor, en particulier principal ou sustentateur, d'hélicoptère sur le fuselage de ce dernier, c'est-à-dire un dispositif de suspension destiné à filtrer des vibrations entre le rotor et le fuselage, en particulier dans deux directions perpendiculaires entre elles ainsi qu'à l'axe de rotation du rotor.

En général, sur les hélicoptères, le ou chaque rotor principal est solidaire en rotation d'un arbre ou mât rotor supporté et entraîné en rotation autour de son axe, qui constitue l'axe de rotation du rotor, par une boîte de transmission dite principale, coaxiale au mât rotor autour de l'axe de rotation, et reliée par au moins un arbre de transmission à un groupe moto propulseur, supporté par la structure du fuselage de l'hélicoptère, en général sur une partie supérieure du fuselage appelée plancher mécanique, sur lequel est également monté l'ensemble constitué de la boîte de transmission principale, du mât et du rotor.

En raison essentiellement des efforts alternés qui s'exercent sur les composants du rotor pendant sa rotation, l'ensemble précité doit être monté sur le fuselage par l'intermédiaire d'un dispositif de suspension filtrant les vibrations transmises du rotor au fuselage, et en particulier les excitations longitudinales (par rapport à l'hélicoptère) et transversales ou latérales, qui sont les plus gênantes.

Parmi les nombreux dispositifs connus de suspension anti-vibratoire de rotor d'hélicoptère, les dispositifs dits "à point focal" ont fait l'objet de différentes propositions et réalisations.

Un dispositif particulier de suspension bidirectionnelle à point focal est décrit dans le brevet US-3,698,663, et comprend :

- un jeu d'au moins trois barres de suspension, rectilignes et rigides, réparties autour de la boîte de transmission considérée et disposées en oblique de sorte à converger vers l'axe de rotation, et vers le dessus ou le dessous de la boîte de transmission, sensiblement en un point dit "point focal", chaque barre étant reliée par une extrémité à la boîte de transmission et articulée par son autre extrémité à un support structural du fuselage, et

- un dispositif de liaison de la base de la boîte de transmission au fuselage, permettant le transfert au fuselage du couple de réaction au couple d'entraînement du rotor par la boîte de transmission, ainsi que des déplacements de la base de la boîte de transmission par rapport au fuselage avec souplesse dans deux directions perpendiculaires entre elles et à l'axe de rotation, qui sont la direction longitudinale et la direction transversale de l'hélicoptère, pour filtrer des vibrations entre le rotor et le fuselage, dans ces deux directions.

Dans un tel dispositif de suspension, l'ensemble précité de la boîte de transmission principale, du mât et du rotor est ainsi attaché à la structure du fuselage par le jeu des barres obliques convergentes au point focal, autour duquel cet ensemble suspendu peut osciller.

Le dispositif de liaison reliant la base ou le fond de la boîte de transmission à la structure du fuselage comprend des moyens de transfert de couple et des moyens de liaison élastique comportant au moins un élément de rappel élastique dans chacune desdites directions perpendiculaires.

Les moyens de tranfert du couple comprennent deux bielles identiques, sensiblement parallèles et s'étendant sensiblement dans un même plan perpendiculaire à l'axe de rotation, une extrémité de chaque bielle étant articulée sur l'un respectivement de deux supports latéraux fixés sur des côtés opposés de la boîte de transmission, les bielles s'étendant d'un même côté d'un plan sensiblement parallèle à l'axe de rotation et passant par les articulations des bielles sur lesdits supports latéraux, tandis que l'autre extrémité des bielles est articulée à au moins un organe transversal par rapport à la direction des bielles, et lui-même articulé en rotation sur la structure du fuselage autour d'un axe perpendiculaire aux bielles en étant élastiquement rappelé vers une position initiale.

Selon US-3,698,663, le dispositif comprend un unique organe transversal, qui est un tube de torsion, d'axe sensiblement perpendiculaire à l'axe de rotation et aux bielles, et articulé autour de son axe sur au moins deux supports structuraux du fuselage, les bielles s'articulant par leur autre extrémité sur le tube de torsion de sorte à solliciter ce dernier avec sensiblement le même moment de torsion, mais dans des sens opposés, les articulations des bielles sur le tube de torsion étant situées chacune au voisinage de l'une respectivement des deux articulations du tube de torsion sur la structure du fuselage et entre ces deux articulations.

Ce dispositif a pour avantage d'assurer une suspension bidirectionnelle, procurant une forte raideur en couple par les bielles, dont l'une est sollicitée en traction et l'autre en compression, et qui constituent avec le tube de torsion sur lequel les bielles sont articulées, une chaîne cinématique principale, entièrement mécanique, assurant le blocage en couple, sans présenter de danger d'endommagement, notamment par les huiles hydrauliques, la retenue du couple étant indépendante des déplacements longitudinaux et transversaux de la base de la boîte de transmission, qui sont amortis par une chaîne cinématique secondaire, comprenant les moyens de liaison élastique.

Dans US-3,698,663, ces moyens de liaison élastique comprennent, pour assurer la liaison élastique perpendiculairement aux bielles, deux autres bielles articulées chacune à la base de la boîte de transmission par une extrémité et dont l'autre extrémité est reliée à un support structural du fuselage par un élément en élastomère, assurant le rappel latéral, tandis que le rappel longitudinal, ou la liaison élastique sensiblement parallèlement aux bielles, est assuré(e) par deux éléments en élastomère, dont chacun est monté entre un support structural du fuselage et une extrémité de l'une respectivement d'encore deux autres bielles articulées chacune par son autre extrémité sur l'extrémité libre de l'un respectivement de deux bras de levier, en saillie radiale sur le tube de torsion, et chacun dans le prolongement diamétral et du côté opposé de l'un respectivement de deux autres bras de levier radiaux solidaires en rotation du tube de torsion, et sur l'extrémité libre de chacun desquels s'articule l'une respectivement des deux bielles reliées à la boîte de transmission.

Avec cette architecture, on comprend qu'un tube de torsion de dimensions modestes suffit à assurer une rigidité élevée en couple, si les bielles reliées à la boîte de transmission sollicitent le tube de torsion avec des bras de levier très courts.

Toutefois, par construction, il n'est pas possible de donner à ces bras de levier une longueur aussi courte que souhaitable et ces bras de levier sont prolongés par ceux des moyens de liaison élastique dans la direction des bielles, de sorte que l'encombrement du dispositif, parallèlement à l'axe du rotor reste important. Il en résulte que les bielles de la chaîne cinématique principale ne peuvent pas être articulées sur la boîte de transmission au niveau de sa base, et que les bras de levier, bielles et éléments d'élastomère des moyens de liaison élastique dans la direction des bielles doivent être logés sous le plancher mécanique, ce qui complique le montage et l'accessibilité pour la maintenance.

En outre, il est délicat et coûteux d'articuler le tube de torsion sur le fuselage et les bielles principales sur le tube de torsion de manière telle que les efforts dans les bielles soient parfaitement antagonistes, et le tube de torsion est sollicité par des contraintes alternées et antagonistes qui sont très préjudiciables à sa durée de vie. Un autre inconvénient de ce dispositif connu est son poids et son encombrement du fait qu'il comporte, en plus des deux bielles principales, deux autres paires de bielles des moyens de liaison élastique.

Le but de l'invention est de proposer un perfectionnement au dispositif de suspension anti-vibratoire bidirectionnelle du type connu par US-3,698,663 et présenté ci-dessus, qui remédie aux inconvénients précités de ce dispositif connu, en étant complètement dégagé du dessous de la boîte de transmission principale et du plancher mécanique, et en offrant une aussi forte raideur en couple, mais procurée par une chaîne cinématique principale de moindre hauteur au-dessus du plancher mécanique du fuselage.

Un autre but de l'invention est de proposer un tel dispositif de suspension permettant aisément l'adoption de raideurs longitudinale et transversale de suspension très différentes l'une de l'autre.

Un autre but encore de l'invention est de proposer un tel dispositif ne nécessitant qu'un minimum de points d'attache sur la structure du fuselage, d'une maintenance aisée, grâce à des interfaces simplifiées, d'une part, avec la boîte de transmission principale, et, d'autre part, avec le fuselage, tout en étant très fiable.

Un autre but enfin de l'invention est de proposer un tel dispositif comportant des moyens de liaison élastique simples, économiques, et d'un entretien aisé.

A cet effet, l'invention propose un dispositif de suspension anti-vibratoire bidirectionnelle, du type présenté ci-dessus, et qui se caractérise en ce qu'il comprend deux organes transversaux qui sont des leviers disposés sensiblement dans le prolongement l'un de l'autre, perpendiculairement aux bielles, et chacun articulé à pivotement sur l'un respectivement de deux supports structuraux du fuselage, autour d'un axe sensiblement parallèle à l'axe du rotor, chacune des bielles étant articulée par son autre extrémité sur l'un respectivement des deux leviers, au voisinage de l'articulation du levier correspondant sur le support structural correspondant, les deux leviers étant par ailleurs reliés l'un à l'autre, au niveau sensiblement du plan radial passant par l'axe du rotor et parallèle aux bielles, par leurs extrémités adjacentes sollicitées par au moins un élément de rappel élastique assurant une liaison élastique dans au moins la direction des bielles.

De manière conventionnelle, et en complément à l'élément de rappel élastique précité, les moyens de liaison élastique du dispositif de l'invention peuvent comprendre éventuellement deux paires de ressorts diamétralement opposés, une paire assurant une liaison élastique dans la direction des bielles et l'autre paire dans la direction perpendiculaire aux bielles, chaque ressort étant métallique ou en caoutchouc et monté entre un support structural du fuselage et un support latéral de la base de la boîte de transmission, qui, pour les ressorts assurant la liaison élastique perpendiculaire aux bielles, peut être l'un des supports latéraux sur lesquels s'articulent les bielles. Cependant, selon l'invention, il suffit que les moyens de liaison élastique comprennent au moins deux ressorts, dont l'un assure une liaison élastique dans la direction des bielles et l'autre assure une liaison élastique dans la direction perpendiculaire à celle des bielles, chaque ressort comportant au moins un élément de rappel élastique en métal et/ou en caoutchouc, naturel ou synthétique, en élastomère, et l'un au moins des ressorts étant monté entre un support structural du fuselage et un support latéral de la base de la boîte de transmission. En variante, ces moyens de liaison élastique peuvent comporter un unique élément de rappel élastique, assurant des liaisons élastiques dans la direction des bielles et dans la direction perpendiculaire à celle des bielles, et comprenant au moins un plot élastique fixé sur un support latéral de la base de la boîte de transmission, sensiblement dans le plan radial passant par l'axe du rotor et parallèle aux bielles. Cette variante est avantageusement compacte et permet une bonne intégration, car l'unique élément de rappel élastique peut être déporté parallèlement aux bielles, c'est-à-dire longitudinalement par rapport à l'hélicoptère, vers l'avant ou vers l'arrière de la boîte de transmission principale, et offrir une plus grande raideur longitudinale.

Les extrémités adjacentes des leviers, couplés entre eux et aux bielles, peuvent être directement articulées l'une sur l'autre par une liaison pivotante d'axe parallèle aux axes de pivot des leviers sur le fuselage, auquel cas il est avantageux que ces extrémités adjacentes soient sollicitées, au niveau de la liaison pivotante, et dans la direction des bielles, par au moins un ressort à au moins un élément de rappel élastique en métal et/ou en caoutchouc, ce ressort étant monté entre lesdites extrémités adjacentes des leviers et un support structural du fuselage, disposé sensiblement dans le plan radial parallèle aux bielles, pour assurer au moins une liaison élastique dans la direction des bielles. La liaison élastique dans la direction perpendiculaire aux bielles peut être assurée par ce même ressort s'il est constitué d'au moins un plot élastique, mais, dans le cas contraire, au moins un second ressort, à au moins un élément de rappel élastique en métal et/ou en caoutchouc, est monté entre un support structural du fuselage et l'un des supports latéraux de la boîte de transmission sur lequel s'articule une bielle, de manière à assurer cette liaison élastique dans la direction perpendiculaire aux bielles.

Cependant, selon une disposition particulièrement intéressante, les extrémités adjacentes des leviers sont articulées sur un palonnier central, chacune par l'une respectivement de deux articulations voisines mais décalées l'une de l'autre dans ledit plan radial parallèle aux bielles, le palonnier étant relié à la base de la boîte de transmission par au moins un élément de rappel élastique assurant une liaison élastique au moins dans la direction des bielles. La liaison entre le palonnier et la base de la boîte de transmission s'accommode d'un unique élément de rappel élastique, constituant l'ensemble des moyens de liaison élastique, et comprenant au moins un plot en caoutchouc assurant des liaisons élastiques dans la direction des bielles comme dans la direction perpendiculaire aux bielles.

L'unique élément de rappel élastique peut comprendre un unique plot en élastique, sollicité en cisaillement entre deux armatures dont l'une est solidaire du palonnier et l'autre d'un support latéral de la base de la boîte de transmission. Les avantages de cette réalisation sont considérables : un seul plot élastique, non lamifié, de structure simple, assure les liaisons élastiques longitudinale et latérale et fait simultanément office de butée limitant les déformations dans ces directions. La maintenance est facilitée car le nombre de composants du dispositif est réduit et chacun de ces composants se démonte facilement. Les reprises d'effort sur la structure du fuselage sont limitées aux deux supports structuraux des articulations des leviers sur le fuselage.

Avantageusement, pour un travail optimum de l'unique plot élastique en cisaillement quasi pur, sans traction ni compression, le plot et ses armatures sont inclinés radialement de l'extérieur vers l'intérieur et de la base vers le dessus de la boîte de transmission. En outre, pour améliorer la durée de vie du plot, ce dernier comporte avantageusement deux couches superposées solidarisées l'une à l'autre en assurant une précharge de compression dans le plot. Pour assurer les raideurs souhaitées et faire office de butée efficace en fin de course, le plot présente avantageusement une section transversale, dans une direction sensiblement perpendiculaire à l'axe de rotation, qui est de forme ovale à grand axe sensiblement perpendiculaire aux bielles. La section transversale de ce plot peut, évidemment, être adaptée au besoins.

Afin de limiter les actions mécaniques du dispositif sur le fuselage, et de faciliter l'adaptation de raideurs longitudinale et transversale différentes, en bénéficiant de l'amplification des déplacements longitudinaux (selon la direction des bielles) des leviers par rapport aux déplacements dans la même direction de la base de la boîte de transmission, les bielles sont de préférence articulées sur les leviers entre les articulations des leviers sur le fuselage. En outre, les bielles sont avantageusement articulées sur les leviers et sur les supports latéraux de la boîte de transmission par des articulations à rotule, et les leviers sont articulés sur le palonnier central et sur les supports structuraux correspondants du fuselage autour d'axes parallèles entre eux et perpendiculaires au plan commun des bielles.

Cette architecture permet, par de faibles déplacements transversaux des pivots des leviers sur le fuselage, de modifier fortement le rapport entre les raideurs longitudinale et latérale de la suspension, pour obtenir les raideurs voulues en s'adaptant à la raideur du caoutchouc du plot élastique, laquelle est choisie pour convenir à la raideur latérale souhaitée. En particulier, l'entraxe (a) entre les centres des articulations de chaque levier sur la bielle correspondante et sur le palonnier et l'entraxe (b) entre les centres des articulations de chaque levier sur la bielle correspondante et sur le support structural correspondant du fuselage peuvent être choisis de sorte que le carré du rapport (a/b) soit sensiblement égal au rapport de la raideur de la suspension dans la direction des bielles (raideur longitudinale) à la raideur de la suspension dans la direction perpendiculaire aux bielles (raideur latérale).

D'autres caractéristiques et avantages de l'invention découleront de la description donnée ci-dessous, à titre non limitatif, d'exemples de réalisation décrits en référence aux dessins annexés sur lesquels :

- la figure 1 est une vue schématique, en élévation latérale et partielle, d'un dispositif de suspension anti-vibratoire à point focal de l'état de la technique,
- la figure 2 est une vue schématique et partielle, en perspective, d'un exemple de dispositif selon la figure 1, limité au dispositif de liaison et pour une suspension bidirectionnelle, fonctionnellement équivalent à l'état de la technique selon US-3,698,663,

- la figure 3 est une vue analogue à la figure 2 pour un premier exemple de dispositif selon l'invention,
- la figure 4 est une vue schématique en plan d'un second exemple de dispositif, analogue à celui de la figure 3,
- la figure 5 est une vue en perspective d'un mode de réalisation du dispositif de la figure 4, et
- la figure 6 est une vue schématique, en partie, en élévation latérale et en partie en coupe axiale du dispositif de la figure 5 représenté dans deux positions différentes pour montrer les déformations du plot élastique.

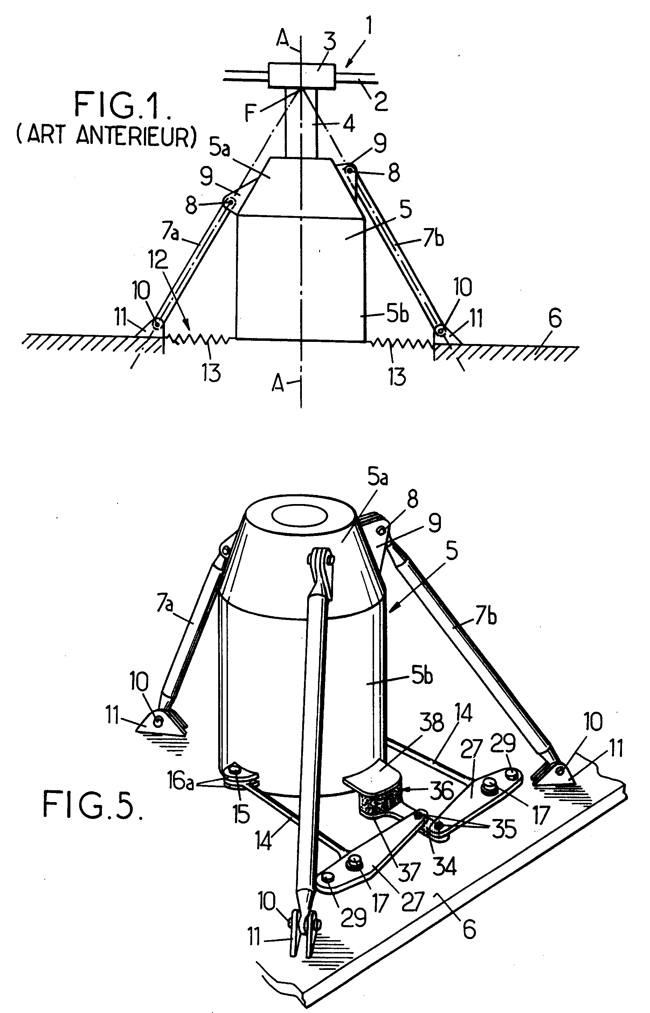

La figure 1 représente un rotor 1 principal d'hélicoptère, dont les pales 2 sont reliées à un moyeu 3 solidaire en rotation de l'extrémité supérieure d'un mât rotor 4, qui est supporté par sa base dans une boîte de transmission principale 5 reliée, de manière non représentée, par un arbre de transmission au groupe moto-propulseur de l'hélicoptère. La boîte de transmission 5 est coaxiale au mât 4 autour de son axe A-A, et l'entraîne en rotation autour de cet axe, qui est l'axe de rotation du rotor. Cette boîte de transmission 5 est suspendue sur le plancher mécanique 6, à la partie supérieure du fuselage de l'hélicoptère, par un dispositif connu de suspension anti-vibratoire bidirectionnelle, qui comprend un jeu de quatre barres de suspension, rectilignes et rigides, réparties autour de la boîte 5 et disposées en oblique par rapport à l'axe de rotation A-A, de sorte à converger vers le dessus de la boîte 5 et vers l'axe de rotation A-A. Ces barres comprennent deux barres avant 7a, disposées vers l'avant (sur la gauche de la figure 1) de l'hélicoptère par rapport à la boîte 5, et deux barres arrière 7b, plus longues que les barres avant 7a. Ces barres 7a et 7b sont ainsi disposées sensiblement comme les quatre arêtes obliques d'un tronc de pyramide à base trapézoïdale et qui relient la grande à la petite base, inclinée sur la grande base. Chaque barre 7a ou 7b est reliée à la partie supérieure tronconique 5a du carter de la boîte 5 par son extrémité supérieure, liée par une articulation à rotule 8 sur une patte d'ancrage 9 en saillie latérale sur la partie supérieure 5a de la boîte 5, les pattes 9 des barres arrière 7b étant plus en hauteur que celles des barres avant 7a, et chaque barre 7a ou 7b est reliée par son extrémité inférieure au plancher mécanique 6 du fuselage par une articulation à rotule 10 la reliant à un support structural 11 du fuselage, par exemple une ferrure d'attache structurale rivée ou boulonnée sur le plancher mécanique 6.

Ainsi, l'ensemble constitué du rotor 1, du mât 4 et de la boîte de transmission 5 est attaché à la structure 6 par le jeu des barres obliques 7a et 7b, dont les axes convergent sensiblement en un point focal F, autour duquel l'ensemble suspendu peut osciller.

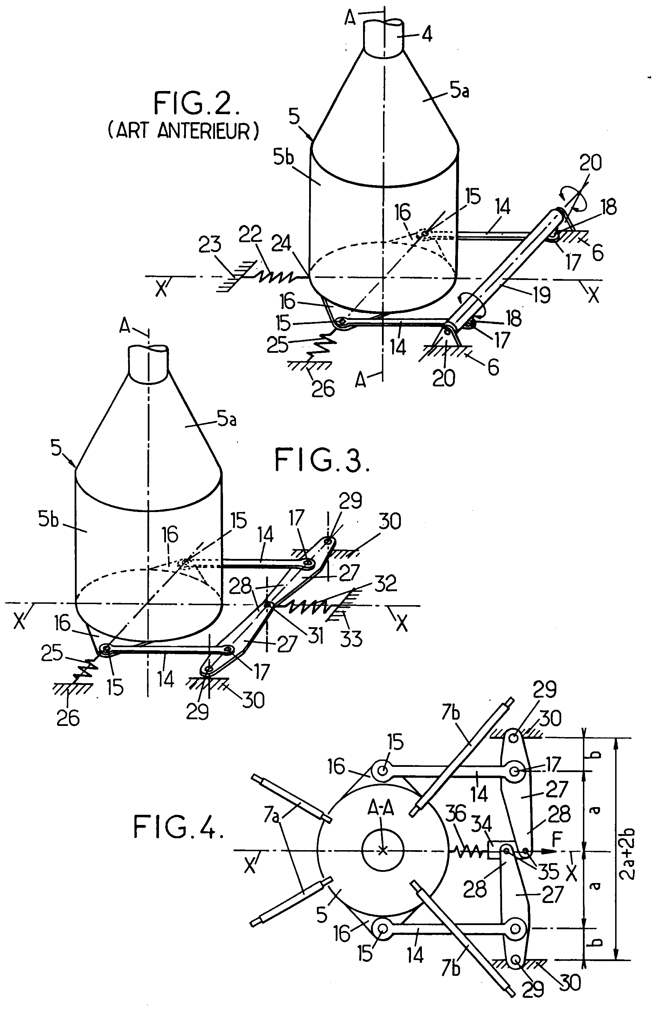

Le dispositif connu de suspension bidirectionnelle à point focal comprend également un dispositif de liaison 12, reliant la base 5b, de forme générale cylindrique, du carter de la boîte 5 au fuselage 6. Ce dispositif de liaison 12 comprend une ou plusieurs liaisons élastiques longitudinales, schématisées en 13, autorisant les déplacements de la base 5b de la boîte 5 avec rappel élastique vers l'avant et vers l'arrière de l'hélicoptère, ainsi qu'une ou plusieurs liaisons élastiques (non schématisées sur la figure 1) autorisant les déplacements latéraux (perpendiculairement au plan de la figure 1) de la base 5b de la boîte 5 avec rappel élastique, pour filtrer les vibrations respectivement longitudinales et transversales ou latérales engendrées par la rotation du rotor 1. Comme connu par US-3,698,663, le dispositif de liaison 12 comprend également des moyens de transfert du couple, constitués d'une chaîne cinématique comprenant deux bielles 14, représentées sur la figure 2, pour transférer au fuselage 6 le couple de réaction au couple d'entraînement en rotation du rotor 1 et du mât 4 par la boîte de transmission 5, de façon à bloquer la rotation de la boîte 5 autour de son axe central A-A sous l'effet de ce couple de réaction.

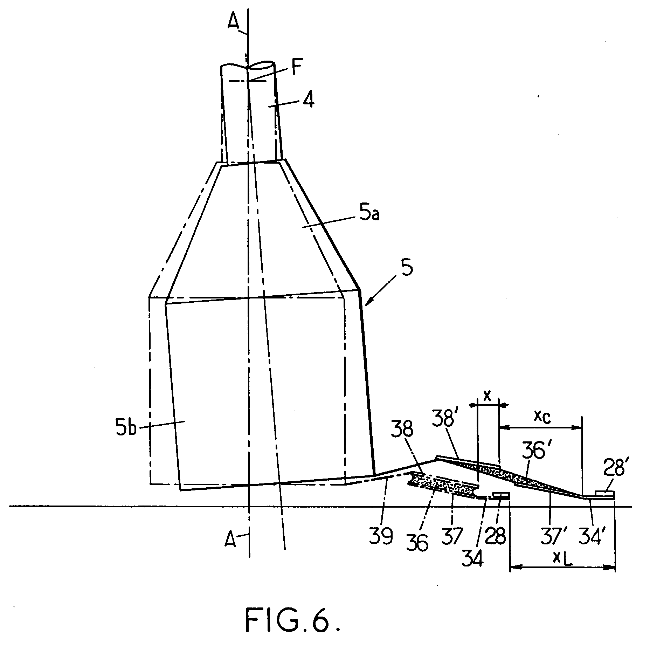

Sur la figure 2, comme dans les exemples selon l'invention des figures 3 à 5 qui comportent de telles bielles, les deux bielles 14 rigides, par exemple en acier ou en titane, et dont chacune des deux extrémités est agencée de préférence en embout à rotule auto-lubrifiante standard, sont identiques, sensiblement parallèles et s'étendent dans un même plan sensiblement perpendiculaire à l'axe de rotation A-A, en position initiale neutre de la boîte de transmission 5. Les bielles 14 sont disposées longitudinalement par rapport à l'hélicoptère, par exemple vers l'arrière de la boîte 5 et chacune d'elles a son extrémité avant reliée par une articulation à rotule 15 sur l'un de deux supports 16 diamétralement opposés et en saillie latérale sur la base 5b de la boîte de transmission 5, chaque support latéral 16 pouvant, comme représenté sur la figure 5, être constitué d'une chape à deux oreilles 16a parallèles et radiales, entre lesquelles la rotule de l'articulation 15 de la bielle 14 correspondante est retenue, de manière classique, par un axe. Les articulations à rotule 15 sont ainsi centrées dans le plan radial transversal, passant par l'axe central A-A de la boîte 5 et perpendiculaire à l'axe longitudinal X-X de l'hélicoptère.

Dans l'exemple de la figure 2, et comme connu par US-3,698,663, chaque bielle 14 est reliée, à son extrémité arrière, par une articulation à rotule 17 à l'extrémité radiale externe de l'un respectivement de deux bras 18 parallèles, en saillie radiale vers l'extérieur d'un tube de torsion 19, perpendiculairement à l'axe longitudinal de ce tube 19 et dans un même plan diamétral de ce dernier. Le tube 19 est perpendiculaire aux bielles 14 et à l'axe central A-A de la boîte de transmission 5. Le tube de torsion 19 est articulé en rotation autour de son axe longitudinal par ses extrémités retenues chacune tourillonnante dans l'une respectivement de deux ferrures d'attache structurales 20 fixées sur le plancher mécanique 6, symétriquement de part et d'autre de l'axe longitudinal X-X et latéralement à l'extérieur des deux rotules 17 et des deux bras 18 également symétriques de part et d'autre de l'axe X-X, chaque rotule 17 étant voisine de la ferrure 20 du côté correspondant.

Les deux bielles identiques 14 sont ainsi montées de manière identique, mais symétriques par rapport à l'axe longitudinal X-X, sur la boîte de transmission 5 et sur le tube de torsion 19 articulé sur la structure du fuselage. Ainsi, le couple de réaction, qui sollicite la boîte de transmission 5 en rotation autour de son axe A-A, est transmis par les bielles 14, dont l'une travaille en compression et l'autre en traction, au tube de torsion 19, dont les parties d'extrémité sont sollicitées en torsion autour de son axe longitudinal dans des sens opposés, mais avec des moments de torsion de même intensité, par les deux bielles 14 dont les articulations 17 sont chacune au voisinage de l'articulation du tube 19 sur la ferrure d'attache structurale 20 correspondante. De manière connue, le tube de torsion 19 oppose un rappel élastique aux déformations en torsion de sens opposés que lui font subir les bielles 14, et tend à revenir vers sa position de repos initiale, correspondant à l'absence de charge en couple sur les bielles 14, et à la boîte de transmission 5 en position neutre initiale. Si les bras 18 sont courts, on comprend que la chaîne cinématique constituée du tube 19, des bras 18, des bielles 14 et des articulations 15 et 17 présente une rigidité en couple très élevée, même avec un tube de torsion 19 de dimensions faibles.

Les excitations longitudinales (selon l'axe X-X) de la boîte de transmission 5 correspondent à des sollicitations simultanées en traction ou en compression des bielles 14 entraînant le tube 19 en rotation sur lui-même dans un sens ou dans l'autre. Sur la figure 2, ces excitations longitudinales sont filtrées par un unique ressort 22, qui peut être métallique ou comporter au moins un élément élastiquement déformable en caoutchouc, naturel ou synthétique (élastomère), et qui est articulé d'une part sur un support 23 structural fixé sur le fuselage 6, et d'autre part sur un support 24 latéralement en saillie sur la base 5b de la boîte de transmission 5, les deux liaisons aux supports 23 et 24 étant centrées dans le plan radial passant par l'axe A-A et par l'axe X-X, donc parallèle aux bielles 14, de sorte que le ressort 22 s'étende selon l'axe X-X et constitue une liaison élastique longitudinale. Ce ressort 22 correspond fonctionnellement aux deux éléments en élastomère montés entre des supports structuraux du fuselage et deux bielles articulées à des bras en saillie radiale sur le tube de torsion 19, du côté opposé et dans le prolongement des bras 18, comme décrit dans US-3,698,663 pour assurer le rappel longitudinal (en se superposant au rappel élastique du tube de torsion lui-même).

Sur la figure 2, un second ressort 25, de structure analogue au ressort 22, constitue une liaison élastique transversale ou latérale, et est également articulé, d'une part sur un support structural 26 fixé à la structure du fuselage 6 et, d'autre part, sur la boîte 5, et par commodité sur l'un des supports 16 sur lesquels s'articulent les bielles 14, pour filtrer les excitations latérales de la boîte 5, autorisées par les bielles 14 et le tube de torsion 19. Ce ressort 25 correspond fonctionnellement aux deux éléments en élastomère montés entre des supports structuraux du fuselage et deux bielles articulées à la base de la boîte 5, et s'étendant sensiblement perpendiculairement aux bielles principales 14, comme décrit dans US-3,698,663 pour assurer le rappel latéral.

Selon l'invention, dans l'exemple de la figure 3, l'extrémité arrière de chaque bielle 14 n'est plus articulée sur un tube de torsion transversal commun, mais reliée par l'articulation 17 à rotule auto-lubrifiante standard sur l'un respectivement de deux leviers 27 rigides et transversaux, articulés sur le plancher mécanique 6. Les leviers 27 en acier sont disposés sensiblement dans le prolongement l'un de l'autre, bout à bout au niveau d'extrémités 28 par lesquelles ils sont adjacents, et orientés perpendiculairement aux bielles 14. Par son extrémité opposée à l'extrémité 28, chacun des leviers 27 est articulé par une liaison pivotante 29, autour d'un axe de pivot perpendiculaire au plan des bielles 14, donc sensiblement parallèle à l'axe A-A, sur une ferrure d'attache 30 structurale fixée au plancher mécanique 6. Chaque articulation 17 d'une bielle 14 sur le levier 27 correspondant est au voisinage de l'articulation 29 de ce levier sur le fuselage, et les deux articulations 17 sont situées entre les deux articulations 29. Par leurs extrémités adjacentes 28, les deux leviers 27 sont articulés l'un sur l'autre par une liaison pivotante 31 d'axe de pivot parallèle aux axes de pivot des articulations 29. La liaison pivotante 31 est centrée sur l'axe longitudinal X-X et son axe de pivot contenu dans le plan radial passant par les axes A-A et X-X, et donc parallèles aux bielles 14. Au niveau de cette liaison pivotante 31, les extrémités adjacentes 28 des leviers 27 sont sollicitées selon l'axe X-X par un ressort 32, constituant une liaison élastique longitudinale, et réalisé en métal ou comprenant un ou plusieurs éléments élastiquement déformables en caoutchouc naturel ou en élastomère. Ce ressort 32 est monté entre la liaison pivotante 31 et un support structural 33 du fuselage, sur lequel le ressort 32 est articulé par une rotule centrée sur l'axe X-X.

Comme dans l'exemple de la figure 2, la liaison élastique transversale est assurée par un ressort 25 articulé par des rotules entre le support structural 26 du fuselage et l'un des supports latéraux 16 de la boîte de transmission 5. De plus, mais de manière non représentée, le ressort 25, dont la direction d'action est perpendiculaire à celle du ressort 32, et s'étendant dans le plan radial perpendiculaire à l'axe X-X, est, comme le ressort 32, avantageusement muni d'au moins une butée limitant les déplacements relatifs de la boîte de transmission 5 et du fuselage 6.

Dans cette disposition, les deux bielles 14 parallèles de reprise du couple de réaction sollicitant le carter de la boîte de transmission 5 sont synchronisées par les deux leviers basculeurs 27 couplés, articulés sur le fuselage et rappelés vers la position initiale neutre par le ressort 32, lors d'oscillations longitudinales de la boîte de transmission 5, dont les oscillations transversales sont filtrées par le ressort 25.

L'avantage de cette réalisation est que les leviers basculeurs 27 peuvent être disposés à une faible hauteur au-dessus du plancher mécanique 6 et qu'ils offrent une très grande raideur sous couple, en restant toujours facilement accessibles, ainsi que les articulations 17 et 29, et les organes de rappel 32 et 25, dont aucun ne doit être installé sous le plancher mécanique.

Dans une variante particulièrement intéressante du dispositif de la figure 3, qui est représentée sur la figure 5, et dont une vue schématique en plan est donnée par la figure 4, les extrémités adjacentes 28 des leviers 27 ne sont plus articulées l'une sur l'autre, mais chacune d'elles est articulée sur un palonnier central 34 orienté selon l'axe X-X, par l'une respectivement de deux articulations à pivot voisines 35, décalées l'une de l'autre selon l'axe X-X, et dont les axes de pivot sont parallèles entre eux et aux axes de pivot des articulations 29 des leviers 27 sur le fuselage. Les articulations à pivot 29 et 35 sont de préférence équipées, de manière connue, de bagues autolubrifiantes, et les ferrures structurales 30 d'attache au fuselage des articulations 29 sont, par exemple, rivées à plat sur le plancher mécanique 6, chacune à proximité de la ferrure structurale 11 de reprise de la barre arrière 7b du côté correspondant.

Le palonnier 34 est relié à la base 5b de la boîte de transmission 5 par un unique élément de rappel élastique 36, schématisé comme un ressort sur la figure 4, mais constitué, comme montré sur la figure 5, par un unique plot élastique en élastomère non lamifié, constituant l'ensemble des moyens de liaison élastique de la base de la boîte de transmission 5 au fuselage, et assurant donc les liaisons élastiques dans la direction longitudinale, parallèlement aux bielles 14, et dans la direction latérale, perpendiculaire aux bielles 14, ainsi que les fonctions de butées longitudinale et transversale en fin de course de déformation, limitant les déplacements relatifs de la boîte 5 et du fuselage.

Ainsi, les leviers 27 articulés sur le fuselage sont reliés à la base de la boîte de transmission 5 par le plot élastique 36, qui, comme montré par la figure 5, est monté et sollicité en cisaillement entre deux armatures rigides, dont une armature inférieure 37 constituant un prolongement élargi du palonnier 34 et une armature supérieure 38 solidaire d'un support latéral en saillie sur l'arrière de la base de la boîte de transmission 5, de sorte que le plot 36 et ses armatures 37 et 38 soient centrés sur l'axe X-X.

La section transversale du plot de caoutchouc 36, parallèlement à ses faces planes d'extrémité adhérisées aux armatures 37 et 38, a une forme sensiblement ovale dont le grand axe est perpendiculaire aux bielles 14. De plus, ce plot 36 comporte deux couches superposées, qui ont été solidarisées l'une contre l'autre sous charge de compression, afin d'introduire dans le plot 36 une précharge de compression bénéfique à sa durée de vie et permettant d'éviter ses fissurations.

Afin que le plot élastique 36 travaille de manière optimale, en cisaillement quasi pur, sans traction ni compression, il est faiblement incliné, selon le petit axe de sa section ovale, avec ses armatures 37 et 38, radialement de l'extérieur vers l'intérieur et axialement du bas vers le haut de la boîte de transmission 5, comme représenté sur la figure 6, sur laquelle la position initiale neutre de la boîte 5 est représentée en traits mixtes et le support latéral de la boîte 5 qui est solidaire de l'armature supérieure 38 du plot 36 est repéré en 39. Compte tenu de la position du plot 36 et de la cinématique du dispositif, l'angle d'inclinaison optimum est de l'ordre de 7°, mais quelques degrés d'écart ne provoqueront qu'une déformée transversale négligeable dans le caoutchouc du plot 36 sous l'effet d'une charge parasite en traction-compression. Cette inclinaison correspond aux mouvements relatifs de la boîte de transmission 5 et des leviers 27, compte tenu de l'amplification des débattements longitudinaux des extrémités adjacentes 28 des leviers 27 par rapport aux débattements longitudinaux de la base 5b de la boîte de transmission 5. La figure 6 représente en traits pleins la position de la boîte 5 lors d'un déplacement longitudinal vers l'arrière d'amplitude "x" à partir de la position neutre initiale en traits mixtes, par pivotement autour du point focal F, cette amplitude "x" étant repérée à l'extrémité arrière libre de l'armature 38, entre sa position initiale et sa position pivotée correspondante en 38'. Simultanément, le déplacement longitudinal "x", transmis par les bielles 14 aux articulations 17 des leviers 27 provoque, en raison de la position des articulations 29 des leviers 27 sur le fuselage, un déplacement longitudinal dans le même sens et amplifié "$x_L$" des extrémités adjacentes 28 des leviers 27 et du palonnier 34, qui viennent occuper des positions repérées en 28' et 34'. Le plot 36 se déforme en cisaillement longitudinal, comme représenté en 36', entre ses armatures occupant les positions 38' et 37', sur une amplitude de déformation "$x_C$" intermédiaire entre "x" et "$x_L$".

Le plot 36 est défini par sa forme ovale et le caoutchouc naturel ou synthétique qui le constitue pour procurer la souplesse nécessaire de la suspension latérale pour le filtrage optimal des vibrations dans cette direction. L'obtention de la raideur longitudinale souhaitée (supérieure à la raideur latérale) est ensuite assurée par le choix des positions relatives des articulations 17 et 29 des leviers 27 sur les bielles 14 et sur le fuselage. En effet, si $\lambda$ est le rapport entre la raideur longitudinale et la raideur latérale, si a est l'entraxe entre les centres des articulations 35 et 17 et b l'entraxe entre les centres des articulations 17 et 29, pour chaque levier 27, comme indiqué sur la figure 4, alors, pour un déplacement longitudinal x de la boîte 5, le cisaillement longitudinal du plot 36 est $x_c = x \cdot (a/b)$ et on trouve que $\lambda = (a/b)^2$.

Partant d'un entraxe 2a entre les articulations 17, qui est fixé par construction de la base de la boîte de transmission 5 et de ses supports latéraux 16, et d'un plot 36 qui, par construction, donne la raideur latérale voulue, si l'on souhaite une raideur longitudinale donnée, dans un rapport $\lambda$ donné avec la raideur latérale, il suffit de choisir l'entraxe b pour que $\lambda = (a/b)^2$, ce qui positionne les articulations 29 par leur entraxe 2(a+b) sur le fuselage.

Il est intéressant de remarquer qu'un rapport $\lambda$ très différent peut être obtenu facilement en faisant varier l'entraxe b d'une valeur relativement faible. L'obtention de la raideur longitudinale à partir de la raideur transversale ne pose pas de problème particulier, car le calcul d'un rapport de levier est assez fiable et précis. La précision dépend directement de celle obtenue sur la raideur latérale, par la définition du caoutchouc du plot 36.

On obtient ainsi un dispositif de suspension anti-vibratoire bidirectionnelle d'une masse faible, d'une excellente fiabilité, d'une maintenance aisée grâce notamment au plot élastique unique 36. Ce dispositif est particulièrement adapté lorsque la géométrie et le fonctionnement dynamique de l'ensemble suspendu demandent des raideurs très différentes en longitudinal et en transversal. Ce dispositif convient à une implantation dans laquelle l'espace, éventuellement de très faible hauteur, entre le fond de la boîte de transmission 5 et le plancher mécanique 6 doit être dégagé. Ce dispositif, très compact, et dont chacun des éléments constitutifs est facilement interchangeable, peut se monter sur un plancher mécanique 6 sans grande modification de ce dernier ni du carter de la boîte de transmission 5, les liaisons du dispositif de suspension d'une part à la boîte de transmission 5 et d'autre part au plancher mécanique 6 du fuselage se limitant à deux points d'attache, dans l'exemple des figures 4 à 6.

## Revendications

1. Dispositif de suspension anti-vibratoire bidirectionnelle d'un rotor (1) d'hélicoptère sur le fuselage (6) de l'hélicoptère, sur lequel le rotor (1) est solidaire en rotation d'un mât (4) supporté et entraîné en rotation autour de son axe (A-A) par une boîte de transmission (5) coaxiale, le dispositif de suspension comprenant :

   - un jeu d'au moins trois barres (7a, 7b) de suspension, rectilignes et rigides, réparties autour de la boîte de transmission (5) et disposées en oblique, de sorte à converger vers l'axe de rotation (A-A), chaque barre (7a, 7b) étant reliée par une extrémité (8) à la boîte de transmission (5) et articulée (10) par son autre extrémité à un support structural (11) du fuselage (6), et

   - un dispositif (12) de liaison de la base (5b) de la boîte de transmission (5) au fuselage (6), permettant le transfert au fuselage (6) du couple de réaction au couple d'entraînement du rotor (1) par la boîte de transmission (5) ainsi que des déplacements de la base (5b) de la boîte de transmission (5) par rapport au fuselage (6) avec souplesse dans deux directions perpendiculaires entre elles et à l'axe de rotation (A-A) pour filtrer des vibrations entre le rotor (1) et le fuselage (6), et comprenant des moyens de transfert de couple et des moyens (13) de liaison élastique comportant au moins un élément de rappel élastique dans chacune desdites directions perpendiculaires, lesdits moyens de transfert du couple comprenant deux bielles (14) identiques, sensiblement parallèles et s'étendant sensiblement dans un même plan perpendiculaire à l'axe de rotation (A-A), une extrémité de chaque bielle (14) étant articulée (15) sur l'un respectivement de deux supports latéraux (16), fixés sur des côtés opposés de la boîte de transmission (5), les bielles (14) s'étendant d'un même côté d'un plan sensiblement parallèle à l'axe de rotation (A-A) et passant par les articulations (15) des bielles (14) sur lesdits supports latéraux (16), tandis que l'autre extrémité des bielles (14) est articulée (17) à au moins un organe (27) transversal par rapport à la direction des bielles (14), et lui-même articulé en rotation sur la structure du fuselage (6) autour d'un axe perpendiculaire aux bielles (14) en étant élastiquement rappelé vers une position initiale, caractérisé en ce qu'il comprend deux organes transversaux qui sont des leviers (27), disposés sensiblement dans le prolongement l'un de l'autre, perpendiculairement aux bielles (14), et chacun articulé (29) à pivotement sur l'un respectivement de deux supports structuraux (30) du fuselage (6), autour d'un axe sensiblement parallèle à l'axe du rotor (A-A), chacune des bielles (14) étant articulée (17) par son autre extrémité sur l'un respectivement des deux leviers (27), au voisinage de l'articulation (29) du levier (27) correspondant sur le support structural (30) correspondant, les deux leviers (27) étant par ailleurs reliés (31, 34) l'un à l'autre, au niveau sensiblement du plan radial passant par l'axe du rotor (A-A) et parallèle aux bielles (14), par leurs extrémités adjacentes (28) sollicitées par au moins un élément de rappel élastique (32, 36) assurant une liaison élastique dans au moins la direction des bielles (14).

**2.** Dispositif de suspension selon la revendication 1, caractérisé en ce que les moyens de liaison élastique comprennent au moins deux ressorts (25, 32), dont l'un (32) assure une liaison élastique dans la direction des bielles (14) et l'autre (25) assure une liaison élastique dans la direction perpendiculaire à celle des bielles (14), chaque ressort (25, 32) comportant au moins un élément de rappel élastique en métal et/ou en caoutchouc, et l'un au moins des ressorts (25) étant monté entre un support structural (26) du fuselage (6) et un support latéral (16) de la base (5b) de la boîte de transmission (5).

**3.** Dispositif de suspension selon la revendication 1, caractérisé en ce que les moyens (13) de liaison élastique comportent un unique élément (36) de rappel élastique, assurant des liaisons élastiques dans la direction des bielles (14) et dans la direction perpendiculaire à celle des bielles (14), et comprenant au moins un plot élastique (36) fixé sur un support latéral (38) de la base (5b) de la boîte de transmission (5), sensiblement dans le plan radial passant par l'axe du rotor (A-A) et parallèle aux bielles (14).

**4.** Dispositif de suspension selon l'une des revendications 1 et 2, caractérisé en ce que les extrémités adjacentes (28) des leviers (27) sont directement articulées l'une sur l'autre par une liaison pivotante (31) d'axe parallèle aux axes de pivot des leviers (27) sur le fuselage (6), et sont sollicitées dans la direction des bielles (14) par au moins un ressort (32) à au moins un élément de rappel élastique en métal et/ou en caoutchouc, et monté entre lesdites extrémités adjacentes (28) des leviers (27) et un support structural (33) du fuselage (6), disposé sensiblement dans ledit plan radial parallèle aux bielles (14).

**5.** Dispositif de suspension selon la revendication 4, caractérisé en ce qu'au moins un second ressort (25), à au moins un élément de rappel élastique en métal et/ou en caoutchouc, est monté entre un support structural (26) du fuselage (6) et l'un des supports latéraux (16) de la boîte de transmission (5) sur lesquels s'articulent les bielles (14), de manière à assurer une liaison élastique dans la direction perpendiculaire aux bielles (14).

**6.** Dispositif de suspension selon l'une quelconque des revendications 1 à 3, caractérisé en ce que les extrémités adjacentes (28) des leviers (27) sont articulées sur un palonnier central (34), chacune par l'une respectivement de deux articulations (35) voisines mais décalées l'une de l'autre dans ledit plan radial parallèle aux bielles (14), le palonnier (34) étant relié à la base (5b) de la boîte de transmission (5) par au moins un élément de rappel élastique (36) assurant une liaison élastique au moins dans la direction des bielles (14).

**7.** Dispositif de suspension selon la revendication 6, caractérisé en ce que le palonnier (34) est relié à la base (5b) de la boîte de transmission (5) par un unique élément de rappel élastique, constituant lesdits moyens de liaison élastique, et comprenant au moins un plot en élastique (36) assurant des liaisons élastiques dans la direction des bielles (14) et dans la direction perpendiculaire aux bielles (14).

**8.** Dispositif de suspension selon la revendication 7, caractérisé en ce que ledit élément de rappel élastique comprend un unique plot élastique (36) sollicité en cisaillement entre deux armatures (37, 38) dont l'une (37) est solidaire du palonnier (34) et l'autre d'un support latéral (39) de la base (5b) de la boîte de transmission (5).

**9.** Dispositif de suspension selon la revendication 8, caractérisé en ce que le plot élastique (36) présente une section transversale, sensiblement perpendiculaire à l'axe de rotation (A-A), qui est de forme ovale à grand axe sensiblement perpendiculaire aux bielles (14).

**10.** Dispositif de suspension selon l'une des revendications 8 et 9, caractérisé en ce que le plot élastique (36) comporte deux couches superposées solidarisées l'une à l'autre en assurant une précharge de compression dans le plot.

**11.** Dispositif de suspension selon l'une quelconque des revendications 8 à 10, caractérisé en ce que le plot (36) et ses armatures (37, 38) sont inclinés radialement de l'extérieur vers l'intérieur et de la base (5b) vers le dessus (5a) de la boîte de transmission (5).

**12.** Dispositif de suspension selon l'une quelconque des revendications 1 à 11, caractérisé en ce que les bielles (14) sont articulées (17) sur les leviers (27) entre les articulations (29) des leviers (27) sur le fuselage (6).

**13.** Dispositif de suspension selon la revendication 12, telle que rattachée à l'une quelconque des revendications 6 à 11, caractérisé en ce que les bielles (14) sont articulées sur les leviers (27) et sur les supports latéraux (16) de la boîte de transmission (5) par des articulations à rotule (15, 17), et les leviers (27) sont articulés (35, 29) sur le palonnier central (34) et sur les supports structuraux (30) correspondants du fuselage (6) autour d'axes parallèles entre eux et perpendiculaires au plan commun des bielles (14).

**14.** Dispositif de suspension selon la revendication 13, caractérisé en ce que l'entraxe (a) entre les centres des articulations (35, 17) de chaque levier (27) sur la bielle (14) correspondante et sur le palonnier (34) et l'entraxe (b) entre les centres des articulations (17, 29) de chaque levier (27) sur la bielle (14) correspondante et sur le support structural (30) correspondant du fuselage (6) sont choisis de sorte que le carré du rapport (a/b) soit sensiblement égal au rapport de la raideur de la suspension dans la direction des bielles (14) à la raideur de la suspension dans la direction perpendiculaire aux bielles (14).

## Claims

1. Device for the bidirectional antivibration suspension of a helicopter rotor (1) on the fuselage (6) of the helicopter, on which the rotor (1) is rotationally integral with a mast (4) supported and rotationally driven about its axis (A-A) by a coaxial transmission gearbox (5), the suspension device comprising:

   - a set of at least three straight rigid suspension bars (7a, 7b) which are distributed around the transmission gearbox (5) and are arranged obliquely so as to converge toward the axis (A-A) of rotation, each bar (7a, 7b) being connected via one end (8) to the transmission gearbox (5) and articulated (10) via its other end to a structural support (11) on the fuselage (6) ; and
   - a device (12) for linking the base (5b) of the transmission gearbox (5) to the fuselage (6), allowing transfer to the fuselage (6) of the reaction torque in reaction to the driving torque of the rotor (1) via the transmission gearbox (5) as well as displacements of the base (5b) of the transmission gearbox (5) with respect to the fuselage (6) with compliance in two directions perpendicular to each other and to the axis (A-A) of rotation in order to filter vibrations between the rotor (1) and the fuselage (6), and comprising torque transfer means and elastic linkage means (13) which include at least one elastic return element in each of said perpendicular directions, said torque transfer means comprising two identical connecting rods (14), these being substantially parallel and extending substantially in a same plane perpendicular to the axis (A-A) of rotation, one end of each connecting rod (14) being articulated (15) respectively to one of two lateral supports (16) which are fixed to opposite sides of the transmission gearbox (5), the connecting rods (14) extending on the same side of a plane substantially parallel to the axis (A-A) of rotation and passing through the articulations (15) of the connecting rods (14) on said lateral supports (16), whereas the other end of the connecting rods (14) is articulated (17) to at least one member (27) which is transverse to the direction of the connecting rods (14) and which is itself articulated to the structure of the fuselage (6) so as to rotate about an axis perpendicular to the connecting rods (14) while being elastically returned toward an initial position, characterised in that it comprises two transverse members which are levers (27), each lying substantially in the extension of the other, perpendicular to the connecting rods (14), and each being articulated (29) so as to pivot respectively on one of two structural supports (30) on the fuselage (6) about an axis substantially parallel to the axis (A-A) of the rotor, each of the connecting rods (14) being articulated (17) via its other end respectively to one of the two levers (27), in the vicinity of the articulation (29) of the corresponding lever (27) to the corresponding structural support (30), the two levers (27) being moreover connected (31, 34) to each other, substantially in the radial plane passing through the axis (A-A) of the rotor and parallel to the connecting rods (14), via their adjacent ends (28) stressed by at least one elastic return element (32, 36) providing an elastic linkage in at least the direction of the connecting rods (14).

2. Suspension device according to claim 1, characterised in that the elastic linkage means comprise at least two springs (25, 32), one of which (32) provides an elastic linkage in the direction of the connecting rods (14) and the other (25) of which provides an elastic linkage in the direction perpendicular to that of the connecting rods (14), each spring (25, 32) including at least one elastic return element made of metal and/or made of rubber, and one at least of the springs (25) being mounted between a structural support (26) on the fuselage (6) and a lateral support (16) on the base (5b) of the transmission gearbox (5).

3. Suspension device according to claim 1, characterised in that the elastic linkage means (13) include a single elastic return element (36), providing elastic linkages in the direction of the connecting rods (14) and in the direction perpendicular to that of the connecting rods (14), and comprising at least one elastic pad (36) fixed to a lateral support (38) on the base (5b) of the transmission gearbox (5), substantially in the radial plane passing through the axis (A-A) of the rotor and parallel to the connecting rods (14).

4. Suspension device according to any one of claims 1 and 2, characterised in that the adjacent ends (28) of the levers (27) are directly articulated to each other, via a pivoting linkage (31) having an axis parallel to the axes of pivoting of the levers (27) to the fuselage (6), and are stressed in the direction of the connecting rods (14) by at least one spring (32) having at least one elastic return element made of metal and/or made of rubber and mounted between said adjacent ends (28) of the levers (27) and a structural support (33) on the fuselage (6), lying substantially in said radial plane parallel to the connecting rods (14).

5. Suspension device according to claim 4, chracterised in that at least a second spring (25), having at least one elastic return element made of metal and/or made of rubber, is mounted between a structural support (26) on the fuselage (6) and one of the lateral supports (16) on the transmission gearbox (5), to which lateral supports the connecting rods (14) are articulated, so as to provide an elastic linkage in the direction perpendicular to the connecting rods (14).

6. Suspension device according to any one of claims 1 to 3, characterised in that the adjacent ends (28) of the levers (27) are articulated to a central crossbar (34), each end respectively via one of two articulations (35) which are adjacent but offset with respect to each other in said radial plane parallel to the connecting rods (14), the crossbar (34) being connected to the base (5b) of the transmission gearbox (5) via at least one elastic return element (36) providing an elastic linkage at least in the direction of the connecting rods (14).

7. Suspension device according to claim 6, characterised in that the crossbar (34) is connected to the base (5b) of the transmission gearbox (5) via a single elastic return element which constitutes said elastic linkage means and comprises at least one elastic pad (36) providing elastic linkages in the direction of the connecting rods (14) and in the direction perpendicular to the connecting rods (14).

8. Suspension device according to claim 7, characterised in that the elastic return element comprises a single elastic pad (36) stressed in shear between two plates (37, 38), one (37) of which is integral with the crossbar (34) and the other with a lateral support (39) on the base (5b) of the transmission gearbox (5).

9. Suspension device according to claim 8, characterised in that the elastic pad (36) has a cross section, substantially perpendicular to the axis (A-A) of rotation, which is of oval shape having the major axis substantially perpendicular to the connecting rods (14).

10. Suspension device according to any one of claims 8 and 9, characterised in that the elastic pad (36) includes two superimposed layers fastened to each other, providing a compressive preload in the pad.

11. Suspension device according to any one of claims 8 to 10, characterised in that the pad (36) and its plates (37, 38) are radially inclined from the outside inward and from the base (5b) toward the top (5a) of the transmission gearbox (5).

12. Suspension device according to any one of claims 1 to 11, characterised in that the connecting rods (14) are articulated (17) to the levers (27) between the articulations (29) of the levers (27) to the fuselage (6).

13. Suspension device according to claim 12, as depending on any one of claims 6 to 11, characterised in that the connecting rods (14) are articulated to the levers (27) and to the lateral supports (16) of the transmission gearbox (5) via ball joints (15, 17) and the levers (27) are articulated (35, 29) to the central crossbar (34) and to the corresponding structural supports (30) on the fuselage (6) about axes parallel to each other and perpendicular to the common plane of the connecting rods (14).

14. Suspension device according to claim 13, characterised in that the center-to-center distance (a), between the centers of the articulations (35, 17) of each lever (27) to the corresponding connecting rod (14) and to the crossbar (34), and the center-to-center distance (b), between the centers of the articulations (17, 29) of each lever (27) to the corresponding connecting rod (14) and to the corresponding structural support (30) on the fuselage (6), are chosen so that the square of the ratio (a/b) is substantially equal to the ratio of the stiffness of the suspension in the direction of the connecting rods (14) to the stiffness of the suspension in the direction perpendicular to the connecting rods (14).

**Patentansprüche**

1. Vorrichtung zur vibrationsfesten Zweirichtungs-Aufhängung eines Hubschrauberrotors (1) am Rumpf (6) des Hubschraubers, auf dem der Rotor (1) mit einem Hast (4) drehvereint ist, der durch einen koaxialen Getriebekasten (5) getragen und um seine Achse (A-A) drehangetrieben wird, wobei die Aufhängevorrichtung umfaßt:

- einen Satz von mindestens drei geraden und steifen Aufhängestäben (7a, 7b), die um den Getriebekasten (5) verteilt und derart schräg angeordnet sind, daß sie zur Drehachse (A-A) hin zusammenlaufen, wobei jeder Stab (7a, 7b) mit einem Ende (8) mit dem Getriebekasten (5) verbunden und mit seinem anderen Ende an einer Aufbaustütze (11) des Rumpfes (6) gelenkig (10) angebracht ist, und

- eine Vorrichtung (12) zur Verbindung des Sokkels (5b) des Getriebekastens (5) am Rumpf (6), welche die Übertragung des Reaktionsmoments auf das Antriebsmoment des Rotors (1) durch den Getriebekasten (5) zum Rumpf (6) sowie Verschiebungen des Sockels (5b) des Getriebekastens (5) in bezug auf den Rumpf (6) mit Weichheit in zwei zueinander senkrechten Richtungen und zur Rotationsachse (A-A) ermöglicht, um Vibrationen zwischen dem Rotor (1) und dem Rumpf (6) zu filtern, und welche Momentübertragungsmittel und Mittel (13) zur elastischen Verbindung aufweist, die wenigstens ein Element zum elastischen Rückstellen in jeder der genannten senkrechten Richtungen enthält, wobei die Momentübertragungsmittel zwei gleiche Stangen (14) enthalten, die im wesentlichen parallel sind und sich im wesentlichen in einer gleichen Ebene erstrecken, die senkrecht zur Rotationsachse (A-A) verläuft, wobei ein Ende jeder Stange (14) an jeweils einer von zwei seitlichen Stützen (16) gelenkig (15) angebracht ist, die an gegenüberliegenden Seiten des Getriebekastens (5) befestigt sind, wobei die Stangen (14) sich auf einer gleichen Seite einer zur Rotationsachse (A-A) im wesentlichen parallel und durch die Gelenke (15) der Stangen (14) an den genannten seitlichen Stützen (16) verlaufenden Ebene erstrecken, wogegen das andere Ende der Stangen (14) an wenigstens einem Organ (27) gelenkig (17) angebracht ist, das quer in bezug auf die Richtung der Stangen (14) verläuft und seinerseits am Aufbau des Rumpfes (6) um eine zu den Stangen (14) senkrechte Achse drehgelenkig angebracht ist, wobei es elastisch auf eine Anfangsposition hin rückgestellt wird, **dadurch gekennzeichnet,** daß sie zwei Querorgane enthält, die Hebel (27) sind, die im wesentlichen in gegenseitiger Verlängerung senkrecht zu den Stangen (14) angeordnet sind und jeweils gelenkig (29) durch Schwenklagerung an jeweils einer von zwei Aufbaustützen (30) des Rumpfes (6) um eine zur Rotorachse (A-A) im wesentlichen parallel verlaufende Achse angebracht sind, wobei jede der Stangen (14) durch ihr anderes Ende an jeweils einem der beiden Hebel (27) in der Nähe des Gelenks (29) des entsprechenden Hebels (27) an der entsprechenden Aufbaustütze (30) gelenkig (17) angebracht ist, wobei die beiden Hebel (27) außerdem in Höhe im wesentlichen der radialen Ebene, die durch die Rotorachse (A-A) und parallel zu den Stangen (14) verläuft, mit ihren zugekehrten Enden (28) miteinander verbunden (31, 34) sind, die durch wenigstens ein elastisches, eine elastische Verbindung zumindest in der Richtung der Stangen (14) gewährleistendes Rückstellelement (32, 36) belastet sind.

2. Aufhängevorrichtung nach Anspruch 1, **dadurch gekennzeichnet,** daß die elastischen Verbindungsmittel wenigstens zwei Federn (25, 32) enthalten, von denen die eine (32) eine elastische Verbindung in der Richtung der Stangen (14) und die andere (25) eine elastische Verbindung in der Richtung gewährleistet, die zu derjenigen der Stangen (14) senkrecht ist, wobei jede Feder (25, 32) wenigstens ein elastisches Rückstellelement aus Metall und/oder aus Kautschuk enthält und wenigstens die eine der Federn (25) zwischen einer Aufbaustütze (26) des Rumpfes (6) und einer seitlichen Stütze (16) des Sockels (5b) des Getriebekastens (5) angebracht ist.

3. Aufhängevorrichtung nach Anspruch 1, **dadurch gekennzeichnet,** daß die Mittel (13) zur elastischen Verbindung ein einziges elastisches Rückstellelement (36) aufweisen, das elastische Verbindungen in der Richtung der Stangen (14) und in der Richtung, die senkrecht zu derjenigen der Stangen (14) ist, gewährleistet und zumindest einen elastischen Klotz (36) enthält, der auf einer seitlichen Stütze (38) des Sockels (5b) des Getriebekastens (5) im wesentlichen in der radialen Ebene befestigt ist, die durch die Rotorachse (A-A) und parallel zu den Stangen (14) verläuft.

4. Aufhängevorrichtung nach einem der Ansprüche 1 und 2, **dadurch gekennzeichnet,** daß die zugekehrten Enden (28) der Hebel (27) direkt gelenkig miteinander durch eine Schwenkverbindung (31) mit einer zu den Schwenkachsen der Hebel (27) am Rumpf (6) parallel verlaufenden Achse verbunden sind und in der Richtung der Stangen (14) durch wenigstens eine Feder (32) mit wenigstens einem elastischen Rückstellelement belastet sind, das aus Metall und/oder aus Kautschuk ist und zwischen den zugekehrten Enden (28) der Hebel (27) und einer im wesentlichen in der genannten, parallel zu den Stangen (14) verlaufenden, radialen Ebene angeordneten Aufbaustütze (33) des Rumpfes (6) angebracht ist.

5. Aufhängevorrichtung nach Anspruch 4, **dadurch gekennzeichnet,** daß wenigstens eine zweite Feder (25) mit wenigstens einem elastischen Rückstellelement aus Metall und/oder aus Kautschuk zwischen einer Aufbaustütze (26) des Rumpfes (6) und der einen der seitlichen Stützen (16) des Getriebekastens (5) angebracht ist, an denen die Stangen (14) gelenkig angebracht sind, um eine elastische Verbindung in der zu den Stangen (14) senkrechten Richtung zu gewährleisten.

6. Aufhängevorrichtung nach einem der Ansprüche 1 bis 3, **dadurch gekennzeichnet**, daß die zugekehrten Enden (28) der Hebel (27) jeweils an einer zentralen Traverse (34) durch jeweils eines von zwei benachbarten, aber in der parallel zu den Stangen (14) verlaufenden, radialen Ebene zueinander versetzten Gelenken (35) gelenkig angebracht sind, wobei die Traverse (34) mit dem Sockel (5b) des Getriebekastens (5) durch wenigstens ein elastisches Rückstellelement (36) verbunden ist, das eine elastische Verbindung zumindest in der Richtung der Stangen (14) gewährleistet.

7. Aufhängevorrichtung nach Anspruch 6, **dadurch gekennzeichnet**, daß die Traverse (34) mit dem Sockel (5b) des Getriebekastens (5) durch ein einziges elastisches Rückstellelement verbunden ist, das die genannten Mittel zur elastischen Verbindung bildet und wenigstens einen Klotz (36) aus Elastikmaterial enthält, der elastische Verbindungen in der Richtung der Stangen (14) und in der Richtung senkrecht zu den Stangen (14) gewährleistet.

8. Aufhängevorrichtung nach Anspruch 7, **dadurch gekennzeichnet**, daß das genannte elastische Rückstellelement einen einzigen elastischen Klotz (36) enthält, der zwischen zwei Bewehrungen (37, 38) scherbeansprucht ist, von denen die eine (37) mit der Traverse (34) und die andere mit einer seitlichen Stütze (39) des Sockels (5b) des Getriebekastens (5) vereint ist.

9. Aufhängevorrichtung nach Anspruch 8, **dadurch gekennzeichnet**, daß der elastische Klotz (36) im wesentlichen senkrecht zur Rotationsachse (A-A) einen Querschnitt aufweist, der von ovaler Form mit einer großen Achse ist, die im wesentlichen senkrecht zu den Stangen (14) verläuft.

10. Aufhängevorrichtung nach einem der Ansprüche 8 und 9, **dadurch gekennzeichnet**, daß der elastische Klotz (36) zwei übereinander angeordnete Lagen enthält, die unter Gewährleistung einer Druckvorbelastung im Klotz miteinander vereint sind.

11. Aufhängevorrichtung nach einem der Ansprüche 8 bis 10, **dadurch gekennzeichnet**, daß der Klotz (36) und seine Bewehrungen (37, 38) radial von außen nach innen und vom Sockel (5b) zur Oberseite (5a) des Getriebekastens (5) hin geneigt sind.

12. Aufhängevorrichtung nach einem der Ansprüche 1 bis 11, **dadurch gekennzeichnet**, daß die Stangen (14) an den Hebeln (27) gelenkig (17) zwischen den Gelenken (29) der Hebel (27) am Rumpf (6) angebracht sind.

13. Aufhängevorrichtung nach Anspruch 12 so wie in Verbindung mit einem der Ansprüche 6 bis 11, **dadurch gekennzeichnet**, daß die Stangen (14) an den Hebeln (27) und an den seitlichen Stützen (16) des Getriebekastens (5) durch Kugelkopfgelenke (15, 17) gelenkig angebracht sind und die Hebel (27) an der zentralen Traverse (34) und an den entsprechenden Aufbaustützen (30) des Rumpfes (6) um zueinander parallel und zur gemeinsamen Ebene der Stangen (14) senkrecht verlaufende Achsen gelenkig (35, 29) gelagert sind.

14. Aufhängevorrichtung nach Anspruch 13, **dadurch gekennzeichnet**, daß der Achsabstand (a) zwischen den Mitten der Gelenke (35, 17) jedes Hebels (27) an der entsprechenden Stange (14) und an der Traverse (34) und der Achsabstand (b) zwischen den Mitten der Gelenke (17, 29) jedes Hebels (27) an der entsprechenden Stange (14) und an der entsprechenden Aufbaustütze (30) des Rumpfes (6) so gewählt sind, daß das Quadrat des Verhältnisses (a/b) im wesentlichen gleich dem Verhältnis der Steifigkeit der Aufhängung in der Richtung der Stangen (14) zur Steifigkeit der Aufhängung in der Richtung senkrecht zu den Stangen (14) ist.

FIG.1.
(ART ANTERIEUR)

FIG.5.

FIG.2.
(ART ANTERIEUR)

FIG.3.

FIG.4.

FIG.6.